# EUROPEAN PATENT SPECIFICATION

(11) **EP 2 862 486 B1**
(45) Date of publication and mention of the grant of the patent: **21.09.2016**
(21) Application number: 14188258.9
(22) Date of filing: 09.10.2014
(51) Int. Cl.: A47J 31/36

(54) **Dispenser unit for an espresso coffee machine of capsule type, for professional use**
Dosiervorrichtung für eine Kapsel-Espresso-Kaffeemaschine zum professionellen Gebrauch
Unité de distribution pour machine à café expresso de type à capsule, à usage professionnel

(30) Priority: 16.10.2013 IT VE20130053
(43) Date of publication of application: 22.04.2015
(73) Proprietor: Elektra S.R.L., 31030 Casier (Treviso) (IT)
(72) Inventor: Fregnan, Andrea, 31030 Casier (IT)
(74) Representative: Piovesana, Paolo

(56) References cited:
- EP-A1- 2 520 203
- WO-A2-2009/093202
- US-A- 5 776 527
- US-A1- 2009 007 794

## Description

The present invention relates to dispenser unit for an espresso coffee machine of capsule type, for professional use.

Espresso coffee machines include machines for domestic use, intended for preparing a limited number of coffees per day, of the order of a few dozen; machines for semi-professional use, used for example in restaurants and intended for preparing some hundreds of coffees per day; and finally machines for professional use, used normally in coffee bars and intended for virtually continuous operation for preparing many hundreds of coffees per day.

Among domestic machines, there is an increasingly widespread use of those machines fed with so-called capsules, i.e. with those substantially rigid closed enclosures containing a measured quantity of coffee powder. At the time of use, these rigid capsules are inserted by the user into a suitable chamber defined in the machine's interior and are then hydraulically sealed therein for the entire duration of the preparation of the coffee infusion, on both the entry side and the exit side. For this preparation the capsule, which can be inserted into its chamber either previously perforated or be perforated once inserted and sealed therein, is struck with a stream of hot water under pressure, which passes through it and forms the infusion, which them emerges through a delivery spout, with which said chamber is provided. When delivery of the coffee infusion ceases, the capsule, housed in its chamber, is still under pressure and a certain waiting time is required, of the order of some tens of seconds, before the chamber can be reopened and returned to atmospheric pressure.

If in fact the chamber containing the capsule were to be opened early, the infusion under pressure would also emerge from the chamber entry side and in time would cause internal incrustations and soiling, which on the one hand could cause "bits" to collect in the coffee cup, and on the other hand could compromise the mechanical operation of the upper part of the machine and the capsule movement.

It is apparent that the waiting time required for the chamber containing the capsule to return to atmospheric pressure before being able to insert a new capsule into the chamber, and the otherwise inevitable formation of soiling and/or incrustations in the case of early opening of the chamber, would render the capsules currently incompatible with the requirements of a machine for professional use.

In effect, current professional coffee machines use so-called filters, each consisting of a cylindrical chamber positioned on a respective filter holder, which after being filled with coffee powder in controlled quantity is manually applied to the coffee machine by the operator and sealedly closed by a bayonet-type coupling handle.

These known professional coffee machines normally use a three-way valve which, when the coffee infusion has been prepared, connects the upper zone of the filter holder (that zone to be struck by the hot water stream) to the outside, hence enabling the pressure present in the filter holder to be discharged directly and immediately to the outside.

In known espresso coffee machines for professional use, the hydraulic seal of the dispenser unit is static and its connection to the chamber containing the coffee powder is made manually by the operator by simply bayonet-fitting the filter holder, in contrast to that which occurs in coffee machines with capsules for domestic use, in which the hydraulic seal of the dispenser unit is dynamic, in that this becomes coupled to the capsule by its movement towards the capsule itself. In particular, the seal of the dispenser unit is achieved by actuators, or manually by a lever operated by the operator. In any event, the capsule is sealedly locked at the entry side and at the exit side before the water is made to emerge from the nozzle of the dispenser unit.

Espresso coffee machines for professional use are also known using a filter holder, in which a support is mounted for receiving a capsule containing the coffee powder. Again in this case, the dispenser unit is fixed and the sealed closure of the chamber containing the capsule is achieved by manual action on the filter holder by the operator. Finally, to enable the coffee mixture to be dispensed, the capsules must necessarily be perforated, this meaning that the capsules have be perforated before being placed in their support in the filter holder, or have to leave their place of production already perforated and preserved in individual sealed sachets until their use.

WO2009/093202 discloses a coffee machine using capsules.

The main object of the invention is to propose a dispenser unit for espresso coffee machines which on the one hand uses capsules, while on the other hand does not present any of the aforedescribed drawbacks.

A particular object of the invention is to provide a dispenser unit for espresso coffee machines which, after a coffee infusion has been prepared, does not require any waiting time before removing the used capsule in order to be able to them replace it with another.

Another object of the invention is to provide a dispenser unit for an espresso coffee machine using capsules which is able to obtain a coffee infusion of quality equal to that obtainable with traditional professional coffee machines.

Another object of the invention is to provide a dispenser unit for an espresso coffee machine which presents high reliability over time by eliminating the formation of solid coffee incrustations or liquid coffee residues.

Another object of the invention is to provide a dispenser unit for an espresso coffee machine which combines the merits of high reliability with those of simple, quick and low-cost construction.

All these and other objects which will be apparent from the ensuing description are attained, according to the invention, by a dispenser unit for an espresso coffee machine of capsule type with the characteristics indicated in claim 1.

The present invention is further clarified hereinafter in terms of two preferred embodiments thereof with reference to the accompanying drawings, in which:

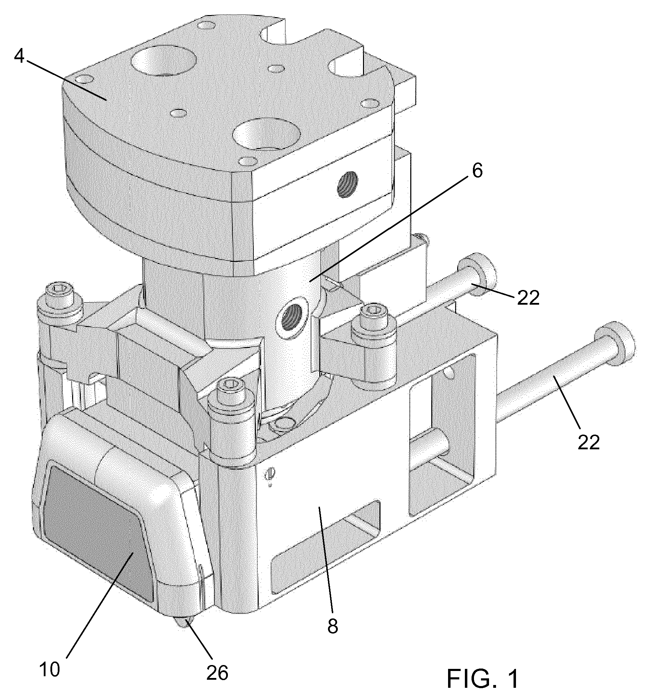

- Figure 1: is a perspective view of a dispenser unit for a espresso coffee machine of capsule type for professional use according to the invention, usable with pre-perforated capsules,

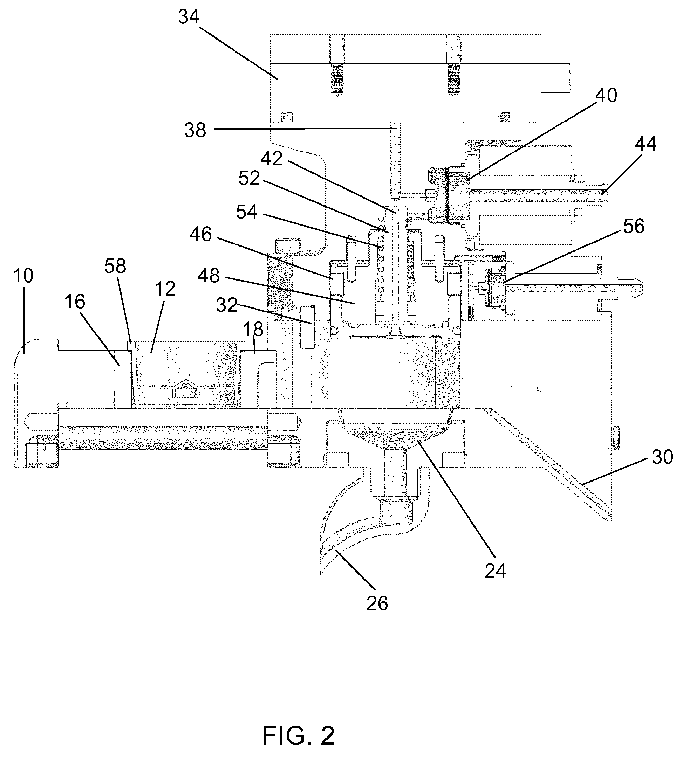

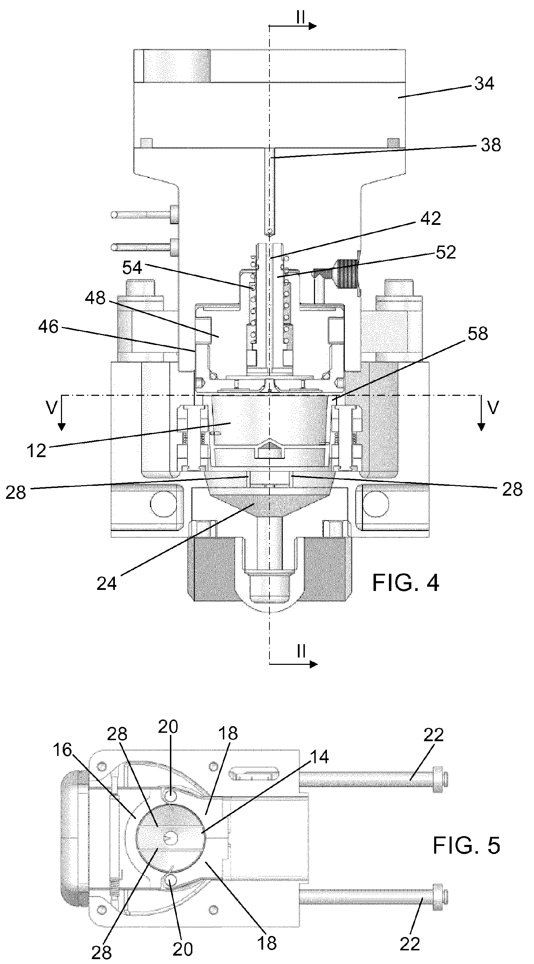

- Figure 2: shows it in longitudinal vertical section on the line II-II of Figure 4 with the capsule holder drawer extracted,

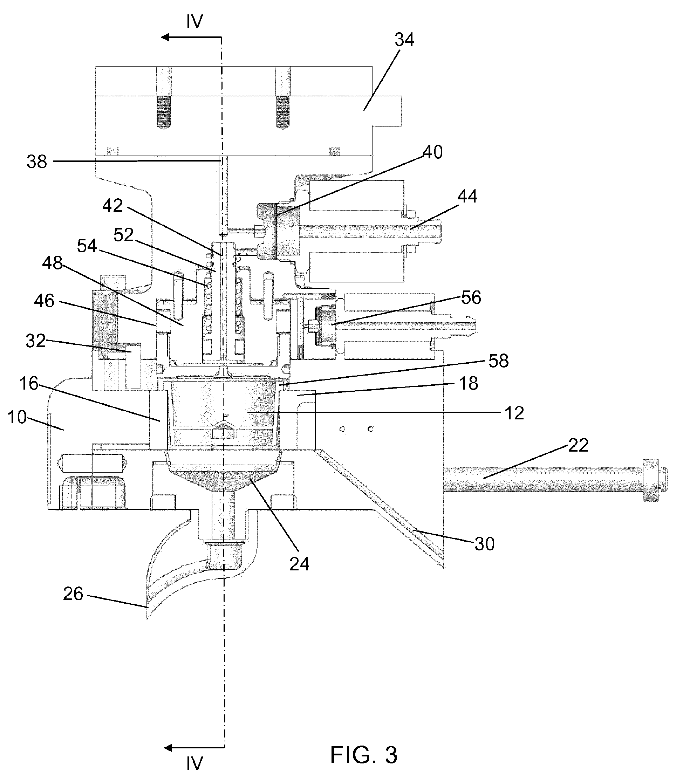

- Figure 3: shows it in the same view as Figure 2 with the capsule holder drawer inserted,
- Figure 4: shows it in vertical section on the line IV-IV of Figure 3,
- Figure 5: shows it in horizontal section on the line V-V of Figure 4 without the capsule, and
- Figure 6: shows it in the same view as Figure 3 in the embodiment usable with capsules which are not pre-perforated.

As can be seen from the figures, the dispenser unit for an espresso coffee machine, according to the invention, comprises a heating head 4 positioned on a thermal unit 6 fixed onto an underlying base 8 provided with a frontally open cavity, into which a drawer 10 for temporarily containing a capsule 12 can be slidably inserted.

The drawer 10 is provided with a cylindrical seat 14 of vertical axis, defined by a semi-circular portion 16 rigid with the drawer and by two jaws 18 each hinged to said semi-circular portion about a vertical pin 20 and elastically divergible outwards. The diameter of the cylindrical seat 14 is slightly greater than the diameter of the capsule 12 immediately below its outwardly jutting upper edge, the overall height of the cylindrical seat 14 being greater than the height of the capsule 12, which is hence supported by the drawer only at its said edge.

In addition, the lower part of the drawer 10 is provided with two parallel horizontal rods 22, which slidably engage in two corresponding through tubular guides provided in the base 8.

The lower part of the base 8 is provided with a funnel 24, which is connected to a spout 26 for delivery of the coffee infusion towards an underlying cup. At its upper opening the funnel 24 is provided with parallel rails 28, spaced apart by a distance suitable to support the capsule 12 at the funnel 24 when no longer supported by the semi-circular support 16 and by the two jaws 16, as better described hereinafter.

The base 8 is also provided at its rear with a chute 30 for discharging the depleted capsules 12 to an underlying removable collection container (not shown).

Hinged to the base 8 in a position immediately overlying the edge of the drawer 10, there is a wall 32 able to interact with the upper edge of the capsule 12 when positioned in its cylindrical seat 14 in the drawer 10, and to yield elastically from its vertical rest position only towards the inside.

The heating head 4 is also provided with a heat exchanger 34 connected to a cold water entry conduit (not shown) and to a delivery conduit 38, connected to a solenoid three-way valve 40. To this latter, the delivery conduit 38 originating from the heat exchanger 34, a pressurized hot water dispensing conduit 42, and a discharge conduit 44, are connected. This solenoid valve 40 is suitably controlled such as to selectively block either the conduit 44, hence connecting together the two conduits 38 and 42, or the conduit 38, hence connecting together the two conduits 42 and 44.

In the thermal unit 6 a chamber 46 is provided in which a piston 48 is disposed, intended to sealedly rest on the upper edge of a capsule 12 when positioned in its seat 14 in the drawer 10. The chamber 46 is connected to a pump (not shown) which provides the water at high pressure required to cause descent of said piston 48, which is slidable along a fixed axial guide 52, inside which the hot water dispensing conduit 42 is provided. Moreover, about the guide 52 a spring 54 is wound, required for the return stroke of the piston 48, which on reaching the upper end-of-stroke position, is ready for a new dispensing cycle. To enable the water to be discharged from the chamber 46, this is connected to the outside via a solenoid valve 56.

The purpose of the heat exchanger 34 is to maintain the thermal unit 6 at temperature, the heat which feeds it being possibly generated by an electrical resistance element embedded in the mass of the heat exchanger itself, or by a hot water flow, which is generated external to the dispenser unit and is fed, for example at a temperature of about 120°C, through a serpentine coil embedded into the mass of the heat exchanger 34, to then emerge at a lower temperature, for example at about 90°C, and then feed the thermal unit 6 via the delivery conduit 38 of the solenoid three-way valve 40.

The thermal unit 6 is made of a metal material of high specific heat and low thermal transmission, and is preferably made of brass.

The lower base of the piston 48 comprises an aperture facing said dispensing conduit 42 and the upper surface of the capsule 12 positioned in its cylindrical seat 14.

The dispenser unit according to the invention is also provided with an electronic control unit for coordinating and controlling the various components, and with a control interface for the user.

The operation of the dispenser unit according to the invention, which in the aforedescribed embodiment is usable with pre-perforated capsules 12, is as follows: when in the rest configuration, the drawer 10 is inserted into the base 8 and contains a spent capsule 12, i.e. already used for preparing the coffee infusion of the previous cycle.

At the moment of preparing a new coffee infusion, the drawer 10 is extracted from the base 8 to enable a new capsule 12 to be inserted into its seat 14. The upper edge 58 of the previous capsule, already present in the seat 14 of the drawer 10, projects from the upper surface of the drawer, hence when this latter is extracted, the edge of the capsule 12 strikes against the wall 32 which, not being able to yield outwards, constitutes a stop for the capsule 12. This wall, as the drawer 10 moves outwards, consequently retains the capsule, which itself causes the jaws 18 to diverge, so that it falls onto the rails 28.

After the drawer 10 has been completely extracted and a new capsule 12 has been positioned in the seat 14 thereof, the subsequent reinsertion of the drawer into the base 8 causes the upper edge 58 of the new capsule 12 to act against the wall 32, causing this to yield elastically inwards to enable the capsule to pass. At the same time, this reinsertion also simultaneously urges the spent capsule, which had already fallen onto the rails 28, to move along these until it falls into the chute 30.

When the new capsule 12 has passed beyond the wall 32, this is able to return elastically into its vertical rest position.

On termination of this travel of reinsertion of the drawer 10, the user can act on the pushbutton of the interface to activate the dispensing cycle. In particular, operating this pushbutton firstly activates the pump, which feeds pressurized water into the chamber 46, causing the piston 48 to descend, so sealedly locking the capsule 12 in its seat. In addition, operating the interface pushbutton causes the three-way valve 40 to change over and pass from the rest configuration, in which it connects together the dispensing conduit 42 and the discharge conduit 44, to a configuration in which the discharge conduit 44 is closed and the delivery conduit 38 is connected to the dispensing conduit 42. Advantageously, the change over of the three-way valve 40 can be caused by the same signal which operates the pump, by interposing a lag implemented by the electronic control unit.

In this manner, the hot water originating from the heat exchanger 34 passes through the delivery conduit 38, the solenoid three-way valve 40 and the dispensing conduit 42, reaches the capsule 12 and passes through the coffee contained therein. The coffee infusion is formed, and then conveyed by the funnel 24 to the delivery spout 26, and reach an underlying cap.

The delivery termination signal, i.e. the signal which interrupts delivery of the coffee mixture, can be fed manually by the operator by acting on the control interface, or can arise automatically by a flow sensor suitably positioned on the water feed to the dispenser unit.

In greater detail, the delivery termination signal again changes over the three-way valve 40, which positions itself to close the delivery conduit 38 and to connect the dispensing conduit 42 to the discharge conduit 44, to restore atmospheric pressure inside the capsule 12.

The pump which feeds drive water for the piston 48 is then halted and the solenoid valve 56 is opened, to enable the chamber 46 to be emptied of the water which had caused the piston to descend, and so enable it to rise again by the effect of the spring 54, so that the capsule 12 is no longer sealedly closed.

At this point, to prepare a new coffee infusion, the user again extracts the drawer 10 and repeats the already described operations.

Advantageously, a single pump could be provided for generating both the pressure for dispensing the hot water onto the capsule 12, and the pressure required for the descent of the piston 48 and for sealed closure of the capsule 12. In greater detail, a pump is provided which dispenses water at a pressure adjustable up to about 20 bar and which acts on two separate circuits, one for the descent of the piston 48 and one for dispensing the water onto the capsule 12.

From the aforegoing it is apparent that the dispenser unit according to the invention solves all the problems which had previously prevented the implementation of an espresso coffee machine for professional operating with capsules, and in particular:
- it provides the capsule seal only at the upper face thereof,
- it presents no problems of soiling or incrustation,
- it requires no waiting time before the capsule can be removed,
- it responds effectively to the specific requirements of reliability, of short cycle time and high infusion quality, within a context of professional use.

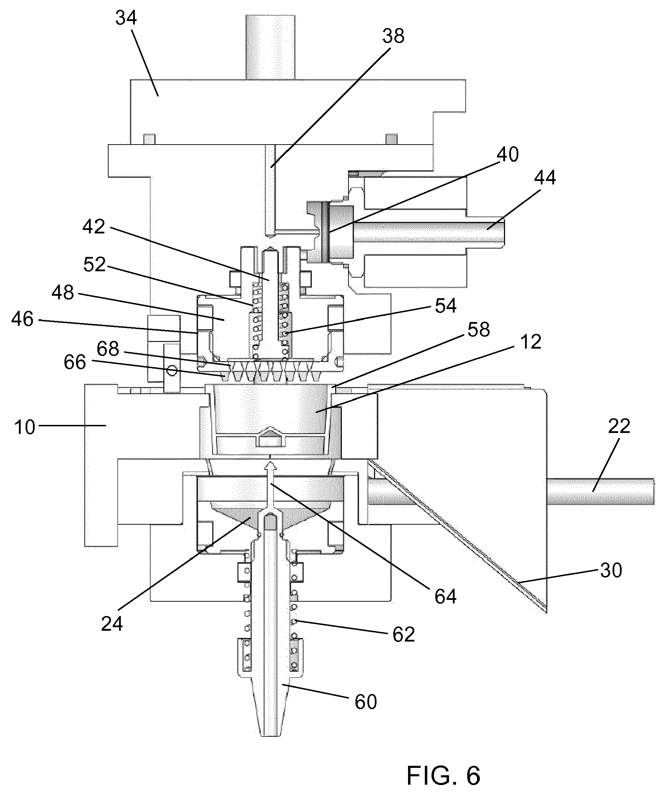

The second embodiment, which is shown in Figure 6, utilizes virtually the same principle and offers the same performance, but is suitable for preparing coffee infusions starting from capsules 12 which are not previously perforated.

To this end, the funnel 24 and delivery spout 26 are formed integral with a vertically movable lower piston 60. It is maintained by a spring 62 in its lower end-of-travel position and is driven upwards by the pressurized cold water via a solenoid valve (not shown). Preferably, the cold water which causes the lower piston 60 to rise and the upper piston 48 to descend originates from the same pump and is fed into two separate circuits, each provided with and controlled by its own solenoid valve.

From the funnel 24, one or more hollow points 64 extend upwards which, when the lower piston 60 has reached its upper end-of travel position, penetrate into the capsule 12 through its lower base to form discharge channels for the coffee infusion.

The upper piston 48 is also provided with a plurality of points 66, which extend downwards, and are able, when said piston 48 descends onto the capsule 12, to perforate the upper closure disc of this latter. In particular, the hot water originating from the heat exchanger 34 leaves the dispensing conduit 41 and, by way of conical channels 68 defined in the lower base of the piston 48, reaches the capsule 12, to strike the coffee mixture contained therein.

A third embodiment is also provided utilizing virtually the same principle and offering the same performance as the aforedescribed embodiments, but is suitable for preparing coffee infusions starting from capsules 12 which have been previously perforated only lowerly. In greater detail, this third embodiment, not shown, is provided lowerly with only the funnel 24 and the delivery spout 26, as in the first embodiment, whereas it is provided upperly with the upper piston 48 of the second embodiment, this being provided with a plurality of downwardly extending points 66 which are able, when said piston 48 descends onto the capsule 12, to perforate the upper closure disc of this latter.

## Claims

1. A dispenser unit for an espresso coffee machine of capsule type for professional use,
- a base (8) connected to the coffee machine and provided with a slidable drawer (10), in which a seat (14) is provided for temporary housing a capsule (12) containing a coffee mixture for preparing a coffee infusion, said drawer (10) being movable between a position outside the base for loading a capsule (12) and a position inside the base for preparing the coffee infusion, said seat (14) being configured such as to ensure that the capsule (12) is maintained therein exclusively by the fact of an outwardly projecting edge (58) thereof resting on the upper edge of said seat (14),
**characterised by** comprising
- means (16, 18) defining said seat (14) within said drawer (10), which are elastically yieldable to enable a spent capsule (12) to escape from said seat when the drawer is extracted from said base (8),
- unidirectional retention means interfering with the upper edge of the capsule (12) housed in said seat (14), such as to yield elastically during insertion of said drawer (10) into the base (8) and to retain the spent capsule during extraction of the drawer from the base, in this manner causing said defining means (16, 18) to yield elastically, with consequent escape of the spent capsule (12) from its seat (14),
- members (22) for guiding the sliding movements of said drawer (10) relative to said base (8),
- means (28) for supporting a spent capsule (12) caused to escape from said seat (14), and means for its conveying towards a collection container,
- a thermal unit (6) with a first piston (48) movable in a controlled manner within a chamber (46) between an inactive position, in which it is raised relative to said capsule (12), and an active position, in which it is made to sealedly adhere to the upper edge (58) of said capsule (12) housed in its seat (14), said first piston (48) being provided longitudinally with a conduit for dispensing pressurized hot water intended to pass through said capsule (12) for preparing the coffee infusion,
- a heat exchanger (34) positioned in contact with said thermal unit and provided with a delivery conduit (38) for feeding the pressurized hot water intended for preparing the coffee infusion,
- first valve means (40) interposed between said delivery conduit (38) originating from said heat exchanger (34), between a conduit (42) for dispensing the pressurized hot water preparing the coffee infusion, and between a discharge conduit (44) communicating with the outside, said first valve means (40) being controlled to selectively connect said dispensing conduit (42) to said delivery conduit (38) or to said discharge conduit (44),
- a control and command unit for the dispenser unit.

2. A dispenser unit as claimed in claim 1, **characterised in that**, associated with said first piston (48), there is a hydraulic circuit for feeding a pressurized fluid for driving said first piston (48), said circuit comprising second valve means (56) for selectively connecting said chamber (46) of said first piston (48) to a feed conduit for said pressurized fluid, or to the outside.

3. A dispenser unit as claimed in one or more of the preceding claims, **characterised in that** a rigid wall (32) having its free lower edge in proximity to the upper surface of said slidable drawer (10) is hinged to the base (8), said wall being disposed vertically when at rest and being elastically yieldable inwards as the result of action against the upper edge (58) of a capsule (12) housed in its seat (14).

4. A dispenser unit as claimed in one or more of the preceding claims, **characterised in that** the cylindrical seat (14) provided in said drawer (10) is defined at its front by a semi-circular portion (16) rigid with said drawer (10), and at its rear by a pair of jaws (18) hinged to said semi-circular portion (16) and yieldable elastically towards the interior of the dispenser unit.

5. A dispenser unit as claimed in one or more of the preceding claims, **characterised in that** a pair of parallel horizontal rods (22) slidably engaging in corresponding tubular guides provided within said base (8) are rigid with said drawer (10).

6. A dispenser unit as claimed in one or more of the preceding claims, **characterised in that** the means (28) for supporting a spent capsule (12), when this is disengaged from its seat (14) provided in said drawer (10), comprise horizontal rails (28) applied to said base (8) in a position underlying said drawer (10).

7. A dispenser unit as claimed in one or more of the preceding claims, **characterised in that** said means for conveying said spent capsule (12) towards a collection container consist of that wall of said drawer (10) which urges said capsule (12) towards a discharge chute (30) which is associated with the base (8) at the rear prolongation of said rails (28).

8. A dispenser unit as claimed in one or more of the preceding claims, **characterised in that** said pressurized water dispensing conduit (42) originating from said first valve means (40) opens into the upper part of the chamber (46) of said first piston (48), said water being used both for preparing the coffee infusion and for driving the piston against the reaction of a coil spring (54) which is loaded during the piston descent movement.

9. A dispenser unit as claimed in one or more of the preceding claims, **characterised in that** said thermal unit is made of metal material of high specific heat and of low thermal transmission.

10. A dispenser unit as claimed in one or more of the preceding claims, **characterised in that** said heat exchanger (34) is fed with the heat generated by an electrical resistance element.

11. A dispenser unit as claimed in one or more of the preceding claims, **characterised in that** said heat exchanger (34) is fed with hot water produced externally and circulating through a serpentine coil connected at its outlet to said delivery conduit (38).

12. A dispenser unit as claimed in one or more of the preceding claims, **characterised in that** an axial guide (52), provided internally with a channel forming said dispensing conduit (42), is associated with the first piston (48) movable within said chamber (46).

13. A dispenser unit as claimed in one or more of the preceding claims, **characterised in that** the first piston (48) has that surface facing the seat (14) of the capsule (12) provided with a plurality of points (66) for perforating the upper closure disc of said capsule (12).

14. A dispenser unit as claimed in one or more of the preceding claims, **characterised by** comprising a funnel portion (24) lowerly connected to a spout (26) for exit of the coffee infusion and which faces the bottom of the capsule (12) when the drawer (10) is inserted into said position inside said base (8).

15. A dispenser unit as claimed in one or more of the preceding claims, **characterised in that** said funnel portion (24) is provided within said base.

16. A dispenser unit as claimed in one or more of the preceding claims, **characterised in that** said funnel portion (24) is mounted on the stem of a second piston (60) provided with hollow points (64) and movable vertically within a cylinder disposed in a position underlying said capsule (12), said second piston (60) being movable between a lower rest position, and an upper position in which said hollow points (64) have penetrated into said capsule (12).

## Patentansprüche

1. Abgabeeinheit für eine Espressokaffeemaschine vom Kapseltyp für den professionellen Einsatz, die Folgendes umfasst:
- ein Unterteil (8), das mit der Kaffeemaschine verbunden ist und mit einer verschiebbaren Schublade (10) versehen ist, in der eine Aufnahme (14) zum zeitweiligen Aufnehmen einer Kapsel (12) vorgesehen ist, die eine Kaffeemischung zum Zubereiten eines Kaffeeaufgusses enthält, wobei die Schublade (10) zwischen einer Position außerhalb des Unterteils, um eine Kapsel (12) zu laden, und einer Position in dem Unterteil, um den Kaffeeaufguss zu zubereiten, bewegt werden kann, wobei die Aufnahme (14) konfiguriert ist, sicherzustellen, dass die Kapsel (12) darin ausschließlich durch die Tatsache einer daraus nach außen überstehende Kante (58), die auf der oberen Kante der Aufnahme (14) ruht, gehalten wird,
**dadurch gekennzeichnet, dass** die Abgabeeinheit Folgendes umfasst:
- Mittel (16, 18) zum Definieren der Aufnahme (14) in der Schublade (10), die elastisch nachgeben, um zu ermöglichen, dass eine verbrauchte Kapsel (12) aus der Aufnahme austritt, wenn die Schublade aus dem Unterteil (8) gezogen wird,
- unidirektionale Haltemittel, die mit der oberen Kante der Kapsel (12), die in der Aufnahme (14) aufgenommen ist, wechselwirken, um beim Einführen der Schublade (10) in das Unterteil (8) elastisch nachzugeben, und um die verbrauchte Kapsel beim Herausziehen der Schublade aus dem Unterteil zu halten, wobei sie auf diese Weise die definierenden Mittel (16, 18) veranlassen, elastisch nachzugeben, wobei die verbrauchte Kapsel (12) infolgedessen aus ihrer Aufnahme (14) austritt,
- Elemente (22) zum Führen der Gleitbewegungen der Schublade (10) bezüglich des Unterteils (8),
- Mittel (28) zum Tragen einer verbrauchten Kapsel (12), die veranlasst wird, aus der Aufnahme (14) auszutreten, und Mittel für deren Beförderung in Richtung eines Sammelbehälters,
- eine Wärmeeinheit (6) mit einem ersten Kolben (48), der in einer kontrollierten Weise in einer Kammer (46) zwischen einer inaktiven Position, in der er bezüglich der Kapsel (12) angehoben ist, und einer aktiven Position bewegt werden kann, in der er abdichtend an der oberen Kante (58) der Kapsel (12), die in ihrer Aufnahme (14) aufgenommen ist, haftet, wobei der erste Kolben (48) in der Längsrichtung mit einer Leitung versehen ist, die unter Druck stehendes heißes Wasser abgibt, das dafür vorgesehen ist, durch die Kapsel (12) zu laufen, um den Kaffeeaufguss zuzubereiten,
- einen Wärmetauscher (34), der im Kontakt mit der Wärmeeinheit positioniert ist und mit einer Zuführleitung (38) versehen ist, um das unter Druck stehende heiße Wasser, das zum Zubereiten des Kaffeeaufgusses vorgesehen ist, zuzuführen,
- erste Ventilmittel (40), die zwischen der Zuführleitung (38), die von dem Wärmetauscher (34) ausgeht, einer Leitung (42) zum Abgeben des unter Druck stehenden heißen Wassers, das den Kaffeeaufguss zubereitet, und einer Abführleitung (44), die mit der Außenseite kommuniziert, eingefügt sind, wobei die ersten Ventilmittel (40) gesteuert werden, um die Abgabeleitung (42) selektiv mit der Zuführleitung (38) oder mit der Abführleitung (44) zu verbinden,
- eine Steuer- und Befehlseinheit für die Abgabeeinheit.

2. Abgabeeinheit nach Anspruch 1, **dadurch gekennzeichnet, dass** es im Zusammenhang mit dem ersten Kolben (48) einen Hydraulikkreis zum Zuführen eines unter Druck stehenden Fluids zum Antreiben des ersten Kolbens (48) gibt, wobei der Kreis zweite Ventilmittel (56) umfasst, um die Kammer (46) des ersten Kolbens (48) selektiv mit einer Zuführleitung für das unter Druck stehende Fluid oder mit der Außenseite zu verbinden.

3. Abgabeeinheit nach einem oder mehreren der vorhergehenden Ansprüche, **dadurch gekennzeichnet, dass** eine starre Wand (32), die ihre freie untere Kante in der Nähe der oberen Oberfläche der verschiebbaren Schublade (10) hat, drehbar an dem Unterteil (8) angebracht ist, wobei die Wand vertikal angeordnet ist, wenn sie ruht, und als das Resultat einer Wirkung gegen die obere Kante (58) einer Kapsel (12), die in ihrer Aufnahme (14) aufgenommen ist, elastisch nach innen nachgibt.

4. Abgabeeinheit nach einem oder mehreren der vorhergehenden Ansprüche, **dadurch gekennzeichnet, dass** die zylindrische Aufnahme (14), die in der Schublade (10) vorgesehen ist, an ihrer Vorderseite durch einen halbkreisförmigen Abschnitt (16), der starr mit der Schublade (10) verbunden ist, und an ihrer Rückseite durch ein Paar Klemmbacken (18), die drehbar an dem halbkreisförmigen Abschnitt (16) befestigt sind und elastisch in Richtung des Inneren der Abgabeeinheit nachgeben, definiert ist.

5. Abgabeeinheit nach einem oder mehreren der vorhergehenden Ansprüche, **dadurch gekennzeichnet, dass** ein Paar paralleler horizontaler Stäbe (22), die verschiebbar in entsprechende röhrenförmige Führungen eingreifen, die in dem Unterteil (8) vorgesehen sind, starr mit der Schublade (10) verbunden sind.

6. Abgabeeinheit nach einem oder mehreren der vorhergehenden Ansprüche, **dadurch gekennzeichnet, dass** die Mittel (28) zum Tragen einer verbrauchten Kapsel (12), wenn diese aus ihrer Aufnahme (14) gelöst wird, die in der Schublade (10) vorgesehen sind, horizontale Schienen (28) umfassen, die an dem Unterteil (8) in einer Position unter der Schublade (10) eingesetzt sind.

7. Abgabeeinheit nach einem oder mehreren der vorhergehenden Ansprüche, **dadurch gekennzeichnet, dass** die Mittel zum Befördern der verbrauchten Kapsel (12) in Richtung eines Sammelbehälters aus der Wand der Schublade (10) bestehen, die die Kapsel (12) in Richtung eines Auswurfkanals (30), der mit dem Unterteil (8) an der hinteren Verlängerung der Schienen (28) verbunden ist, drückt.

8. Abgabeeinheit nach einem oder mehreren der vorhergehenden Ansprüche, **dadurch gekennzeichnet, dass** die Leitung (42) zum Abgeben des unter Druck stehenden heißen Wassers, die von den ersten Ventilmitteln (40) ausgeht, in den oberen Teil der Kammer (46) des ersten Kolbens (48) öffnet, wobei das Wasser sowohl zum Zubereiten des Kaffeeaufgusses als auch zum Antreiben des Kolbens gegen die Gegenwirkung einer Schraubenfeder (54), die während der Abwärtsbewegung des Kolbens belastet ist, verwendet wird.

9. Abgabeeinheit nach einem oder mehreren der vorhergehenden Ansprüche, **dadurch gekennzeichnet, dass** die Wärmeeinheit aus einem Metallmaterial mit hoher Wärmekapazität und geringem Wärmedurchgang hergestellt ist.

10. Abgabeeinheit nach einem oder mehreren der vorhergehenden Ansprüche, **dadurch gekennzeichnet, dass** der Wärmetauscher (34) mit der von einem elektrischen Widerstandselement erzeugten Wärme gespeist wird.

11. Abgabeeinheit nach einem oder mehreren der vorhergehenden Ansprüche, **dadurch gekennzeichnet, dass** der Wärmetauscher (34) mit heißem Wasser gespeist wird, das extern erzeugt wird und durch eine Rohrschlange zirkuliert, die an ihrem Auslass mit der Zuführleitung (38) verbunden ist.

12. Abgabeeinheit nach einem oder mehreren der vorhergehenden Ansprüche, **dadurch gekennzeichnet, dass** eine axiale Führung (52), die innen mit einem Kanal, der die Abgabeleitung (42) bildet, versehen ist, dem ersten Kolben (48) zugeordnet ist, der in der Kammer (46) bewegt werden kann.

13. Abgabeeinheit nach einem oder mehreren der vorhergehenden Ansprüche, **dadurch gekennzeichnet, dass** der erste Kolben (48) die Oberfläche, die der Aufnahme (14) der Kapsel (12) gegenüberliegt, mit mehreren Spitzen (66) versehen ist, um die obere Verschlussscheibe der Kapsel (12) zu durchstechen.

14. Abgabeeinheit nach einem oder mehreren der vorhergehenden Ansprüche, **dadurch gekennzeichnet, dass** sie einen Trichterabschnitt (24) umfasst, der unten mit einer Tülle (26) für das Austreten des Kaffeeaufgusses verbunden ist, und der dem Boden der Kapsel (12) gegenüberliegt, wenn die Schublade (10) in die Position im Inneren des Unterteils (8) eingeführt wird.

15. Abgabeeinheit nach einem oder mehreren der vorhergehenden Ansprüche, **dadurch gekennzeichnet, dass** der Trichterabschnitt (24) in dem Unterteil vorgesehen ist.

16. Abgabeeinheit nach einem oder mehreren der vorhergehenden Ansprüche, **dadurch gekennzeichnet, dass** der Trichterabschnitt (24) auf dem Bolzen eines zweiten Kolbens (60) montiert ist, der mit Hohlspitzen (64) versehen ist und in einem Zylinder, der in einer Position unter der Kapsel (12) angeordnet ist, vertikal bewegt werden kann, wobei der zweite Kolben (60) zwischen einer unteren Ruheposition und einer oberen Position bewegt werden kann, in der die Hohlspitzen (64) in die Kapsel (12) eingedrungen sind.

## Revendications

1. Unité de distribution pour machine à café expresso de type à capsule, à usage professionnel,
- une base (8) reliée à la machine à café et pourvue d'un tiroir (10) pouvant coulisser, dans laquelle un siège (14) est prévu pour loger temporairement une capsule (12) contenant un mélange de café permettant de préparer une infusion de café, ledit tiroir (10) étant mobile entre une position à l'extérieur de la base permettant de charger une capsule (12) et une position à l'intérieur de la base permettant de préparer l'infusion de café, ledit siège (14) étant configuré de façon à assurer le maintien de la capsule (12) à l'intérieur de celui-ci exclusivement par le fait qu'un bord (58) de celle-ci faisant saillie vers l'extérieur repose sur le bord supérieur dudit siège (14),
**caractérisée par le fait qu'**elle comporte
- des moyens (16, 18) de délimitation dudit siège (14) à l'intérieur dudit tiroir (10), qui sont élastiquement déformables pour permettre à une capsule (12) usagée de s'échapper dudit siège lorsque le tiroir est extrait de ladite base (8),
- des moyens de retenue unidirectionnels faisant obstacle au bord supérieur de la capsule (12) logée dans ledit siège (14), de telle sorte qu'il se déforme élastiquement durant l'insertion dudit tiroir (10) dans la base (8) et qu'il retienne la capsule usagée durant l'extraction du tiroir de la base, entraînant de cette manière la déformation élastique desdits moyens de délimitation (16, 18), avec l'échappement qui s'ensuit de la capsule (12) usagée de son siège (14),
- des éléments (22) permettant de guider les mouvements de coulissement dudit tiroir (10) par rapport à ladite base (8),
- des moyens (28) permettant de supporter une capsule (12) usagée amenée à s'échapper dudit siège (14), et des moyens permettant de la transporter vers un récipient de collecte,
- une unité (6) thermique munie d'un premier piston (48) mobile d'une manière contrôlée à l'intérieur d'une chambre (46) entre une position inactive, dans laquelle il est surélevé par rapport à ladite capsule (12), et une position active, dans laquelle il est forcé à adhérer de manière étanche au bord (58) supérieur de ladite capsule (12) logée dans son siège (14), ledit premier piston (48) étant muni longitudinalement d'un conduit permettant de distribuer de l'eau chaude sous pression destinée à passer à travers ladite capsule (12) afin de préparer l'infusion de café,
- un échangeur (34) de chaleur positionné en contact avec ladite unité thermique et muni d'un conduit (38) de débit permettant d'acheminer l'eau chaude sous pression destinée à la préparation de l'infusion de café,
- des premiers moyens (40) de valve interposés entre ledit conduit (38) de débit provenant dudit échangeur (34) de chaleur, un conduit (42) permettant de distribuer l'eau chaude sous pression qui prépare l'infusion de café, et un conduit (44) d'évacuation qui communique avec l'extérieur, lesdits premiers moyens (40) de valve étant contrôlés pour relier sélectivement ledit conduit (42) de distribution audit conduit (38) de débit ou audit conduit (44) d'évacuation,
- une unité de contrôle et de commande pour l'unité de distribution.

2. Unité de distribution selon la revendication 1, **caractérisée en ce que**, associé audit premier piston (48), se trouve un circuit hydraulique permettant d'acheminer un fluide sous pression destiné à entraîner ledit premier piston (48), ledit circuit comportant des seconds moyens (56) de valve permettant de relier sélectivement ladite chambre (46) dudit premier piston (48) à un conduit d'acheminement pour ledit fluide sous pression, ou vers l'extérieur.

3. Unité de distribution selon l'une ou plusieurs des revendications précédentes, **caractérisée en ce qu'**une paroi (32) rigide ayant son bord inférieur libre à proximité de la surface supérieure dudit tiroir (10) coulissant est articulée sur la base (8), ladite paroi étant disposée verticalement lorsqu'elle est au repos et étant déformable élastiquement vers l'intérieur à la suite d'une action contre le bord (58) supérieur d'une capsule (12) logée dans son siège (14).

4. Unité de distribution selon l'une ou plusieurs des revendications précédentes, **caractérisée en ce que** le siège (14) cylindrique prévu dans ledit tiroir (10) est délimité au niveau de sa face avant par une partie (16) semi-circulaire solidaire dudit tiroir (10), et au niveau de sa face arrière par une paire de mâchoires (18) articulées sur ladite partie (16) semi-circulaire et déformables élastiquement vers l'intérieur de l'unité de distribution.

5. Unité de distribution selon l'une ou plusieurs des revendications précédentes, **caractérisée en ce qu'**une paire de tiges (22) horizontales parallèles, engagées de manière coulissante dans des guides tubulaires correspondants prévus à l'intérieur de ladite base (8), sont solidaires dudit tiroir (10).

6. Unité de distribution selon l'une ou plusieurs des revendications précédentes, **caractérisée en ce que** les moyens (28) permettant de supporter une capsule (12) usagée, lorsqu'elle est dégagée de son siège (14) prévu dans ledit tiroir (10), comportent des rails (28) horizontaux appliqués sur ladite base (8) dans une position située sous ledit tiroir (10).

7. Unité de distribution selon l'une ou plusieurs des revendications précédentes, **caractérisée en ce que** lesdits moyens permettant de transporter ladite capsule (12) usagée vers un récipient de collecte sont constitués de la paroi même dudit tiroir (10) qui pousse ladite capsule (12) vers une chute (30) d'évacuation qui est associée à la base (8) au niveau du prolongement arrière desdits rails (28).

8. Unité de distribution selon l'une ou plusieurs des revendications précédentes, **caractérisée en ce que** ledit conduit (42) de distribution d'eau sous pression provenant desdits premiers moyens (40) de valve débouche dans la partie supérieure de la chambre (46) dudit premier piston (48), ladite eau étant utilisée à la fois pour préparer l'infusion de café et pour entraîner le piston contre la réaction d'un ressort (54) en spirale qui est chargé durant le mouvement de descente du piston.

9. Unité de distribution selon l'une ou plusieurs des revendications précédentes, **caractérisée en ce que** ladite unité thermique est réalisée dans un matériau métallique présentant une chaleur spécifique élevée et une faible transmission thermique.

10. Unité de distribution selon l'une ou plusieurs des revendications précédentes, **caractérisée en ce que** l'échangeur (34) de chaleur est alimenté avec la chaleur générée par un élément de résistance électrique.

11. Unité de distribution selon l'une ou plusieurs des revendications précédentes, **caractérisée en ce que** ledit échangeur (34) de chaleur est alimenté en eau chaude produite à l'extérieur et circulant à travers un serpentin relié à sa sortie audit conduit (38) de débit.

12. Unité de distribution selon l'une ou plusieurs des revendications précédentes, **caractérisée en ce qu'**un guide (52) axial, muni intérieurement d'un canal formant ledit conduit (42) de distribution, est associé au premier piston (48) mobile à l'intérieur de ladite chambre (46).

13. Unité de distribution selon l'une ou plusieurs des revendications précédentes, **caractérisée en ce que** le premier piston (48) présente une surface orientée vers le siège (14) de la capsule (12) et pourvue d'une pluralité de pointes (66) permettant de perforer le disque de fermeture supérieur de ladite capsule (12).

14. Unité de distribution selon l'une ou plusieurs des revendications précédentes, **caractérisée par le fait qu'**elle comporte une partie (24) entonnoir reliée dans sa partie inférieure à un bec verseur (26) permettant la sortie de l'infusion de café et qui est orientée vers le fond de la capsule (12) lorsque le tiroir (10) est inséré dans ladite position à l'intérieur de ladite base (8).

15. Unité de distribution selon l'une ou plusieurs des revendications précédentes, **caractérisée en ce que** ladite partie (24) entonnoir est prévue à l'intérieur de ladite base.

16. Unité de distribution selon l'une ou plusieurs des revendications précédentes, **caractérisée en ce que** ladite partie (24) entonnoir est montée sur la tige d'un second piston (60) muni de pointes (64) creuses et mobile verticalement à l'intérieur d'un cylindre disposé dans une position située sous ladite capsule (12), ledit second piston (60) étant mobile entre une position de repos inférieure, et une position de supérieure dans laquelle lesdites pointes (64) creuses ont pénétré dans ladite capsule (12).
